# EUROPEAN PATENT SPECIFICATION

(11) **EP 3 078 594 B1**
(45) Date of publication and mention of the grant of the patent: **01.08.2018**
(21) Application number: 16162455.6
(22) Date of filing: 25.03.2016
(51) Int. Cl.: B64D 11/06, B60N 2/34

(54) **IMPROVED DIFFERENTLY CONFIGURABLE VEHICLE SEAT**
VERBESSERTER UNTERSCHIEDLICH KONFIGURIERBARER FAHRZEUGSITZ
SIÈGE DE VÉHICULE CONFIGURABLE DIFFÉREMMENT AMÉLIORÉ

(30) Priority: 30.03.2015 IT UB20153489 U; 12.02.2016 IT UB20164516 U
(43) Date of publication of application: 12.10.2016
(73) Proprietor: Aviointeriors S.p.A., 80133 Napoli (NA) (IT)
(72) Inventor: VENERUSO, Alberto, 80133 Napoli (NA) (IT)
(74) Representative: Iannone, Carlo Luigi

(56) References cited:
- WO-A1-03/093051
- DE-A1-102008 051 603
- US-A1- 2004 051 003
- US-A1- 2013 054 279
- US-A1- 2015 028 642

## Description

This invention relates to an improved differently configurable vehicle seat, where "differently configurable" means a seat configurable from a seated position to a substantially lying down position, and vice versa.

The seat according to this invention can be advantageously applied inside aircraft, but it can also be installed in other types of vehicles.

The description below relates to the installation of the seat of the above-mentioned type inside an aircraft, but it is quite apparent how the same should not be considered limited to this specific use.

An example of a known solution of a seat having a structure such as being able to adopt both a seated and lying down position is shown in the patent application US 2013/0054279 A1.

The seat described in US 2013/0054279 A1 comprises, in particular, a support for the legs of the passenger, articulated to the front portion of the seat.

The support can be tipped between a lowered position, wherein it is positioned substantially vertically beneath the seat, and a raised position, wherein it is positioned substantially horizontally in such a way as to be substantially coplanar with the seat.

The technical solution proposed by the above-mentioned US patent application has, however, several drawbacks linked mainly to the poor comfort of the passenger, especially when the seat is configured in the seated position.

In effect, when the seat is configured in that way, the passenger has limited possibility of movement of his/her feet, which are obstructed by the leg support positioned, vertically, beneath the seat.

Another example of a known solution is described in the patent application US 2015/028642 A1 disclosing a chair for use in a vehicle.

In light of the above, the aim of this invention is therefore to provide a differently configurable vehicle seat, which allows the passenger using the seat to enjoy a high level of comfort, in any configuration of the seat.

Another aim of this invention is to provide a differently configurable vehicle seat which has a particularly simple constructional structure, so as to have relatively low manufacturing costs and reduced risks of malfunctions or breakages.

A further aim of this invention is to provide a differently configurable vehicle seat which is equipped with a safe and reliable locking system.

This invention therefore specifically relates to a differently configurable vehicle seat a traditional seat for vehicles, comprising: a frame; a backrest coupled to the frame; and a seating unit comprising a seating base and an articulated kinematic mechanism for connecting the seating base to the frame, in such a way that the seating base is movable between a withdrawn position, wherein a side of the seating base is substantially adjacent to the backrest, so as to allow a passenger to sit on the seating base, and an extended position, wherein the seating base is positioned at a predetermined distance from the backrest, so as to allow the passenger to rest his/her legs on the seating base; characterized in that the seat comprises a seating support fixed to the frame and positioned in such a way that, when the seating base is in the withdrawn position, the seating support is beneath the seating base; and in such a way that, when the seating base is in the extended position, the seating support is positioned between the backrest and the seating base.

Preferably, according to the invention, the seat may comprise a compensation cushion configured for being positioned on the seating support, in the space between the backrest and the seating base, when the seating base is positioned in the extended position.

Advantageously, according to the invention, the compensation cushion can have a thickness such that, when the compensation cushion is positioned on the seating support, the top surface of the compensation cushion is substantially coplanar with the top surface of the seating base.

Further, according to the invention, the seating base may comprise a plate element and the articulated kinematic mechanism may comprise a first pair of articulated arms and a second pair of articulated arms, the arms of the first pair of articulated arms and second pair of articulated arms being connected in a rotatable manner to the frame and to the plate element.

Again, according to the invention, the arms of the first pair of articulated arms can be parallel to the arms of the second pair of articulated arms.

Preferably, according to the invention, the frame may comprise a front crosspiece positioned in a front part of the frame and wherein the arms of the first pair of articulated arms and second pair of articulated arms may be connected in a rotatable manner to the front crosspiece.

Advantageously, according to the invention, the arms of the first pair of articulated arms and second pair of articulated arms can have a respective curved end portion, provided at the front crosspiece, in such a way that the curved end portion of a first arm of the first pair of articulated arms and the curved end portion of a first arm of a second pair of articulated arms rest on the front crosspiece when the seating base is positioned in the withdrawn position, and in such a way that the curved end portion of a second arm of the first pair of articulated arms and the curved end portion of a send arm of the second pair of articulated arms rest on the front crosspiece when the seating base is positioned in the extended position.

Advantageously, according to the invention, the seat may comprise a locking system to lock the seating base in the withdrawn position; the locking system comprising mobile engaging means for mutually engaging the seating base and the frame, and actuating means for actuating the engaging means.

Again according to the invention, at least one cavity may be formed in the frame; the actuating means may comprise a manual actuator element movable between an activation position and a rest position, and a flexible element positioned in such a way that when the manual actuator element is in the rest position, the flexible element is in an extended configuration, and when the manual actuator element is in the activation position, the flexible element is in a folded configuration; and the engagement means may comprise a pin connected to the flexible element in such a way that when the flexible element is in the extended configuration, the pin is engaged with the at least one cavity, and that when the flexible element is in the folded configuration, the pin is disengaged from the at least one cavity.

Further, according to the invention, the locking system may comprise elastic means configured to keep the pin engages with the at least one cavity.

This invention also relates to a series of seats comprising at least two seats as mentioned above, wherein the at least two seats are mutually alongside each other.

This invention also relates to a kit for converting into a differently configurable vehicle seat a traditional seat for vehicles comprising a frame and a backrest coupled to the frame, the kit further comprising a seating unit comprising a seating base and an articulated kinematic mechanism for connecting the seating base to the frame, in such a way that the seating base is movable between a withdrawn position, wherein a side of the seating base is substantially adjacent to the backrest, so as to allow a passenger to sit on the seating base, and an extended position, wherein the seating base is positioned at a predetermined distance from the backrest, so as to allow the passenger to rest his/her legs on the seating element.

The present invention is now described, by way of example and without limiting the scope of the invention, with reference to the accompanying drawings which illustrate preferred embodiments of it, in which:
Figure 1 shows a series of seats in accordance with the present invention, with a seat in a first configuration;
Figure 2 shows a series of seats in accordance with the present invention, with a seat in a second configuration;
Figure 3 shows a series of seats in accordance with the present invention, with a seat in a third configuration;
Figure 4 shows a series of seats in accordance with the present invention, with a seat in a fourth configuration; and
Figure 5 shows a series of seats in a second embodiment in accordance with the present invention;
Figure 6 is a detailed view of a seat of the series shown in Figure 5;
   and
Figure 7 is a partial view, in cross section, of the seat shown in Figure 6.

The similar parts in the various drawings will be labelled with the same reference numerals.

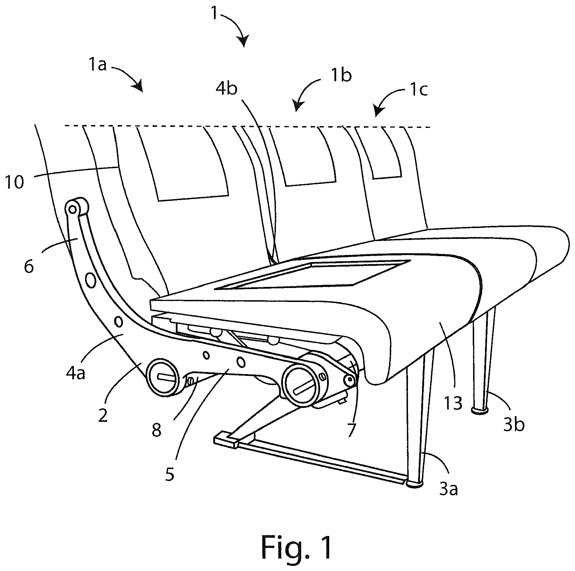

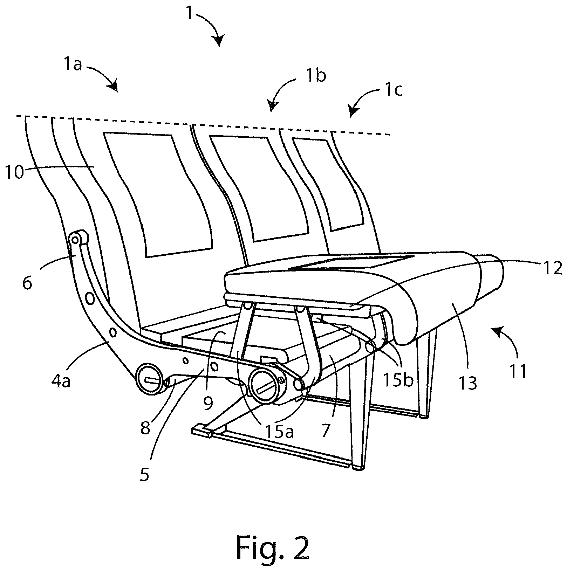

With reference to Figures 1 to 4, the numeral 1 indicates a series of seats supported, below, by two pedestals 3a, 3b configured in such a way as to be able to be fixed to the bottom of the compartment of the vehicle selected for the installation.

The above-mentioned series of seats 1 consists of three differently configurable vehicle seats 1a, 1b, 1c, positioned mutually alongside each other.

Each of the differently configurable vehicle seats 1a, 1b, 1c comprises a frame 2 formed by two shaped lateral supports 4a, 4b, mutually spaced and parallel, and each comprising a substantially horizontal portion 5 and a substantially vertical portion 6.

The lateral supports 4a, 4b of each seat are held together by a front crosspiece 7 and a rear crosspiece 8, which also form part of the frame 2.

Each of the seats 1a, 1b, 1c also comprises a sort of rigid cushion 9 fixed to the frame 2 and housed, substantially, between the front crosspiece 7 and the rear crosspiece 8.

A respective backrest 10 is mounted on the substantially vertical portions 6 of the lateral supports 4a, 4b of each seat 1a, 1b, 1c.

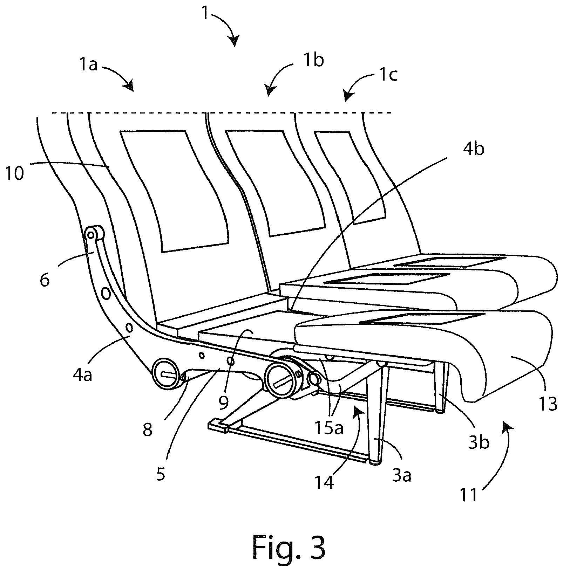

Each seat 1a, 1b, 1c also comprises a seating unit 11 which is movable between a withdrawn position (ref. Figure 1) and an extended position (ref. Figure 3), and vice versa.

The seating unit 11 comprises, more specifically, a supporting plate 12, on which is mounted a seating cushion 13, and articulated kinematic mechanism 14 formed by two pairs of shaped arms 15a, 15b connected in an articulated manner to the front crosspiece 7 and to the supporting plate 12, to form to articulated parallelograms, in such a way as to allow the manual movement, by means of a substantially "wave-like" movement (ref. Figures 1, 2, 3), of the seating unit 11 from the withdrawn position to the extended position and vice versa.

More specifically, the arms of the first pair of shaped arms 15a and the arms of the second pair of shaped arms 15b are positioned in such a way as to be parallel to each other at any moment of their movement.

Moreover, the arms of each pair of shaped arms 15a, 15b are shaped substantially in the form of a "J", that is, consisting of a substantially straight portion connected to the supporting plate 12 and a curved portion to be connected to the front crosspiece 7.

The specific shape of the arms, described above, enables the total stability of the seating unit 11 to be achieved in both positions, withdrawn and extended, thanks to the stable resting of the curved portions of the arms on the relative front crosspiece (ref. Figures 1 and 3).

More specifically, when the seating unit 11 is positioned in its withdrawn position, the supporting plate 12 with the relative seating cushion 13 is located above the rigid cushion 9.

On the contrary, when the seating unit 11 is in the extended position, the supporting plate 12 with the relative seating cushion 13 is located in an advanced position, in a longitudinal direction, and slightly raised relative to the rigid cushion 9.

For this reason, when the seating unit 11 is in the extended position, an empty space is created between the seating cushion 13 and the backrest 10, due to the difference in level between the seating cushion 13 and the rigid cushion 9.

In order to compensate for this difference in level, favouring the comfort of the passenger, it is possible to use a compensation cushion 16, to be placed above the rigid cushion 9 when the seating unit 11 is positioned in the relative extended position.

Preferably, the above-mentioned compensation cushion 16 has a thickness such that, when placed on the rigid cushion 9, its upper surface is substantially coplanar with the upper surface of the seating cushion 13 in the extended position.

Therefore, when the seating unit 11 is in the withdrawn position, the passenger can sit on the seat, having total freedom of movement for his/her feet (ref. Figure 1).

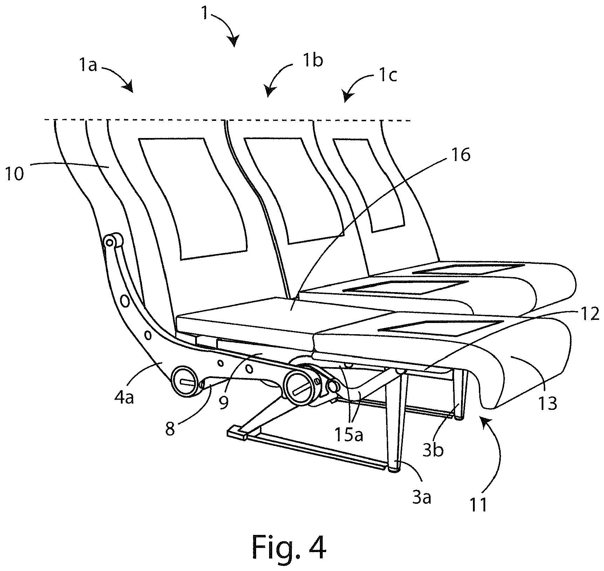

When, however, the seating unit 11 is in the extended position, the passenger is able to freely extend his/her legs resting them on the seating cushion 13, which in this case is in the forward position as described above (ref. Figure 4).

This invention therefore allows the passenger to experience a high level of comfort when travelling both when in the seated position, with the seating unit 11 in the withdrawn position, and with the legs extended on the seating cushion 13, with the seating unit 11 in the extended position.

Clearly, according to other embodiments of this invention not shown in the accompanying drawings but falling within the inventive concept, the above-mentioned series of seats 1 may comprise a number of seats more or less than three.

The inventive concept according to this invention also includes a kit for converting into an differently configurable vehicle seat, as described above, a traditional seat for vehicles comprising a frame 2, a backrest 10 coupled to the frame 2 and a fixed seat.

More specifically, the kit comprises the seating unit 11 described above, to be coupled to the frame 2 after removing the fixed seat of the traditional seating, in such a way as to obtain the mobility of the seating unit 11, and therefore also of the seating cushion 13, between the withdrawn position and the extended position mentioned above, and vice versa.

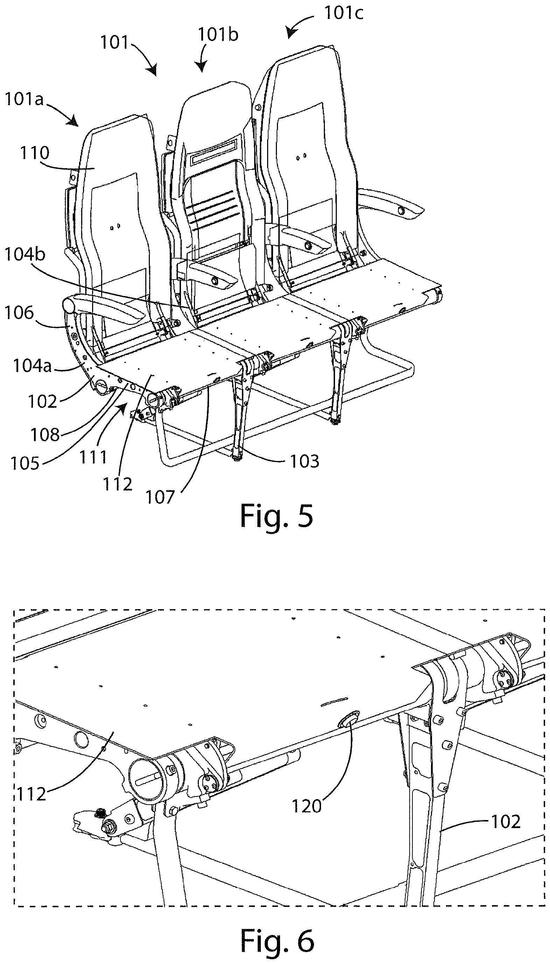

With reference to Figures 5 to 7, the numeral 101 denotes a further series of seats supported, below, by a supporting structure 103.

The series of seats 101 consists of three differently configurable vehicle seats 101a, 101b, 101c, positioned mutually alongside each other.

Each of the differently configurable vehicle seats 101a, 101b, 101c comprises a frame 102 formed by two shaped lateral supports 104a, 104b, mutually spaced and parallel, and each comprising a substantially horizontal portion 105 and a substantially vertical portion 106, as in the first embodiment described above.

The lateral supports 104a, 104b of each seat are held together by a front crosspiece 107 and a rear crosspiece 108.

Also in this case, each of the seats 101a, 101b, 101c has a fixed supporting element between the front crosspiece 107 and the rear crosspiece 108.

A respective backrest 110 is mounted on the substantially vertical portions 106 of the lateral supports 104a, 104b of each seat 101a, 101b, 101c.

As in the first embodiment mentioned above and shown in Figures 1-4, each seat 101a, 101b, 101c comprises a seating unit 111 which is movable between a withdrawn position and an extended position, and vice versa.

More specifically, the seating unit 111 has a supporting plate 112 connected to the frame 102 by means of an articulated kinematic mechanism identical to the articulated kinematic mechanism 14 described above.

Therefore, also in this case, the supporting structure 112 is movable, manually by means of a "wave-like" movement, from a withdrawn position to an extended position and vice versa.

A cushion may be mounted on the supporting plate 112 to increase the seating comfort for the passenger.

In order to compensate for the difference in level which is created between the cushion and the above-mentioned fixed supporting element when the seating unit 111 is configured in the respective extended position, a compensation cushion is also used here to be placed on the supporting element.

Beneath the front part of each supporting plate 112 there is, inside a respective casing 117, a locking system 118 for locking the seating unit 111 when configured in the relative withdrawn position.

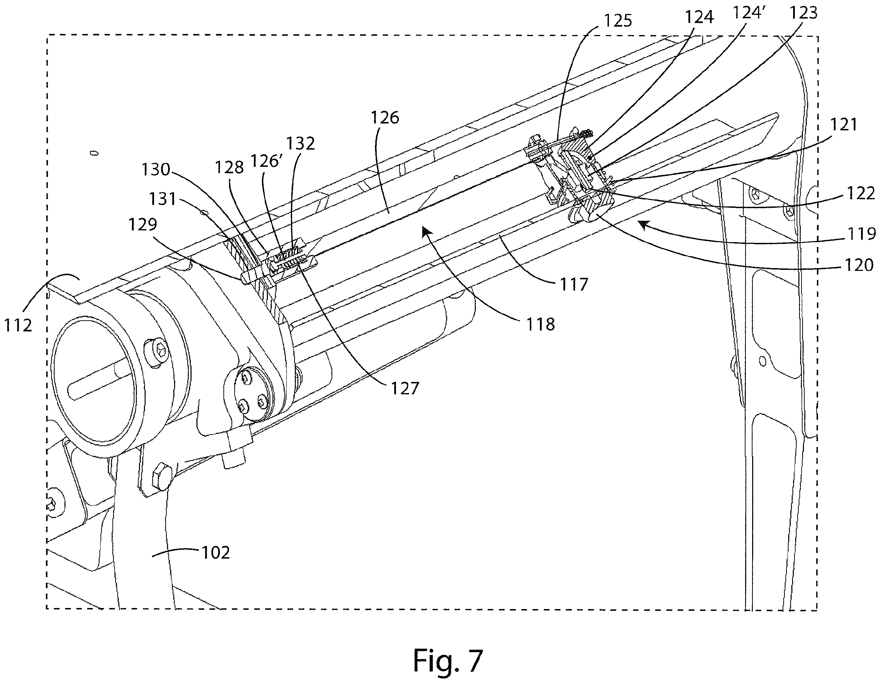

More specifically, the locking system 118 comprises an actuating unit 119 which comprises, in turn, an actuating button 120 protruding from the casing 117 which is movable between an extracted rest position (ref. Figure 7) and a withdrawn operating position.

The actuating button 120 is fitted with a spring 121 to hold it in the respective extracted rest position.

The actuating unit 119 also comprises a rod 122 coupled to the actuating button 120 and linearly mobile on a guide 123, and a lever element 124, on which the rod 122 is fitted.

More specifically, the lever element 124 is substantially L-shaped and is pivoted at a respective pin 124' located to the side of the rod 122.

In a position adjacent to the lever element 124 and opposite the rod 122 there is a flexible cable 125 having a respective end fixed, that is, integral with the casing 117, and the other end coupled to an oblong element 126, substantially rigid, positioned substantially horizontally.

The end of the oblong element 126 opposite the area of connection with the cable 125 has an attachment portion 126' which is substantially T-shaped and positioned inside a seat 127 defined by a hollow portion 128 of the casing 117.

The free end of the attachment portion 126' is constrained to the base of a pin 129 passing through a first hole 130 formed in the casing 117 and a second hole 131 made in the frame 102 coaxially with the first hole 130.

In the seat 127 there is also a compression spring 132 positioned, on one side, in contact with a shoulder of the hollow portion 128 and, on the other side, in contact with the base of the pin 129, in that way to keep the latter, unless there is the application of external forces, in the position of interference with the frame 102 shown in Figure 7.

During operation of the locking system 118, when the seating unit 111 is positioned in the relative withdrawn position, the pin 129 occupies, due to the thrust exerted by the compression spring 132, both the holes 130, 131 preventing the relative movement of the supporting plate 112 relative to the frame 102 (ref. Figure 7), by interference.

When, however, actuating button 120 is pressed, this, moving from the extracted rest position to the withdrawn operating position, pushes the rod 122 towards the lever element 124 making it rotate about the relative pin 124'.

The rotation of the lever element 124 produces, in turn, the deformation of the adjacent cable 125 which, bending, will pull towards itself the oblong element 126, overcoming the elastic force of the compression spring 132.

During this withdrawing movement, the oblong element 126 carries with it also the pin 129, disengaging it from the second hole 131 formed in the frame 102.

Whilst this disengagement condition is maintained between the pin 129 and the frame 102 it is possible to move the supporting plate 112, that is, its movement in the respective extended position.

The above-mentioned locking system 118 therefore allows the seating unit 111 and the relative supporting plate 112 to be efficiently locked in the withdrawn position, thereby preventing the possibility that accidental movements occur of the supporting plate 112.

This invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. A differently configurable vehicle seat (1a, 1b, 1c; 101a, 101b, 101c), comprising:
a frame (2, 102);
a backrest (10, 110) coupled to the frame (2, 102); and
a seating unit (11, 111) comprising a seating base (12, 13; 112) and an articulated kinematic mechanism (14) for connecting the seating base (12, 13; 112) to the frame (2, 102), in such a way that the seating base (12, 13; 112) is movable between a withdrawn position, wherein a side of the seating base (12, 13; 112) is substantially adjacent to the backrest (10, 110), so as to allow a passenger to sit on the seating base (12, 13; 112), and an extended position, wherein the seating base (12, 13; 112) is positioned at a predetermined distance from the backrest (10, 110), so as to allow the passenger to rest his/her legs on the seating base (12, 13; 112);
**characterized in that** the seat (1a, 1b, 1c; 101a, 101b, 101c) comprises a seating support (9) fixed to the frame (2, 102) and positioned in such a way that, when the seating base (12, 13; 112) is in the withdrawn position, the seating support (9) is beneath the seating base (12, 13; 112); and in such a way that, when the seating base (12, 13; 112) is in the extended position, the seating support (9) is positioned between the backrest (10, 110) and the seating base (12, 13; 112).

2. The seat (1a, 1b, 1c) according to claim 1, comprising a compensation cushion (16) configured for being positioned on the seating support (9), in the space between the backrest (10) and the seating base (12, 13), when the seating base (12, 13) is positioned in the extended position.

3. The seat (1a, 1b, 1c) according to claim 2, wherein the compensation cushion (16) has a thickness such that, when the compensation cushion (16) is positioned on the seating support (9), the top surface of the compensation cushion (16) is substantially coplanar with the top surface of the seating base (12, 13).

4. The seat (1a, 1b, 1c) according to any one of the preceding claims, wherein the seating base comprises a plate element (12) and wherein the articulated kinematic mechanism (14) comprises a first pair of articulated arms (15a) and a second pair of articulated arms (15b), the arms of the first pair of articulated arms (15a) and second pair of articulated arms (15b) being connected in a rotatable manner to the frame (2) and to the plate element (12).

5. The seat (1a, 1b, 1c) according to the preceding claim, wherein the arms of the first pair of articulated arms (15a) are parallel to the arms of the second pair of articulated arms (15b).

6. The seat (1a, 1b, 1c) according to claim 4 or 5, wherein the frame (2) comprises a front crosspiece (7) positioned in a front part of the frame (2) and wherein the arms of the first pair of articulated arms (15a) and second pair of articulated arms (15b) are connected in a rotatable manner to the front crosspiece (7).

7. The seat (1a, 1b, 1c) according to the preceding claim, wherein the arms of the first pair of articulated arms (15a) and second pair of articulated arms (15b) have a respective curved end portion, provided at the front crosspiece (7), in such a way that the curved end portion of a first arm of the first pair of articulated arms (15a) and the curved end portion of a first arm of a second pair of articulated arms (15b) rest on the front crosspiece (7) when the seating base (12, 13) is positioned in the withdrawn position, and in such a way that the curved end portion of a second arm of the first pair of articulated arms (15a) and the curved end portion of a second arm of the second pair of articulated arms (15b) rest on the front crosspiece (7) when the seating base (12, 13) is positioned in the extended position.

8. The seat (101a, 101b, 101c) according to any one of the preceding claims, **characterised in that** it comprises a locking system (118) to lock the seating base (112) in the withdrawn position; the locking system (118) comprising mobile engaging means (129) for mutually engaging the seating base (112) and the frame (102), and actuating means (119) for actuating the engaging means (129).

9. The seat (101a, 101b, 101c) according to claim 8, **characterised in that** at least one cavity (131) is formed in the frame (102);
**in that** the actuating means (119) comprise a manual actuator element (120) movable between an activation position and a rest position, and a flexible element (125) positioned in such a way that when the manual actuator element (120) is in the rest position, the flexible element (125) is in an extended configuration, and when the manual actuator element (120) is in the activation position, the flexible element (125) is in a folded configuration;
and **in that** the engagement means comprise a pin (129) connected to the flexible element (125) in such a way that when the flexible element (125) is in the extended configuration, the pin (129) is engaged with the at least one cavity (131), and that when the flexible element (125) is in the folded configuration, the pin (129) is disengaged from the at least one cavity (131).

10. The seat (101a, 101b, 101c) according to claim 9, **characterised in that** the locking system (118) comprises elastic means (132) configured for keeping the pin (129) engaged with the at least one cavity (131).

11. Series (1) of seats (1a, 1b, 1c) comprising at least two seats according to any one of the preceding claims, wherein the at least two seats are mutually alongside each other.

## Patentansprüche

1. Unterschiedlich konfigurierbarer Fahrzeugsitz (1a, 1b, 1c; 101a, 101b, 101c), umfassend:
einen Rahmen (2, 102);
eine Rückenlehne (10, 110), die mit dem Rahmen (2, 102) verbunden ist;
und
eine Sitzeinheit (11, 111), die eine Sitzbasis (12, 13; 112) und einen gelenkigen kinematischen Mechanismus (14) umfasst, um die Sitzbasis (12, 13; 112) auf eine solche Weise mit dem Rahmen (2, 102) zu verbinden, dass die Sitzbasis (12, 13; 112) zwischen einer zurückgezogenen Position, in der eine Seite der Sitzbasis (12, 13; 112) im Wesentlichen an die Rückenlehne (10, 110) angrenzt, um es einem Passagier zu erlauben, auf der Sitzbasis (12, 13; 112) zu sitzen, und einer ausgefahrenen Position bewegt werden kann, in der die Sitzbasis (12, 13; 112) in einem vorbestimmten Abstand von der Rückenlehne (10, 110) positioniert ist, um es dem Passagier zu erlauben, seine/ihre Beine auf die Sitzbasis (12, 13; 112) zu legen;
**dadurch gekennzeichnet, dass** der Sitz (1a, 1b, 1c; 101a, 101b, 101c) eine Sitzunterstützung (9) umfasst, die an dem Rahmen (2, 102) fixiert und auf eine solche Weise positioniert ist, dass, wenn sich die Sitzbasis (12, 13; 112) in der zurückgezogenen Position befindet, die Sitzunterstützung (9) unterhalb der Sitzbasis (12, 13; 112) ist, und auf eine solche Weise, dass, wenn sich die Sitzbasis (12, 13; 112) in der ausgefahrenen Position befindet, die Sitzunterstützung (9) zwischen der Rückenlehne (10, 110) und der Sitzbasis (12, 13; 112) positioniert ist.

2. Sitz (1a, 1b, 1c) nach Anspruch 1, umfassend ein Ausgleichspolster (16), das konfiguriert ist, um auf der Sitzunterstützung (9) in dem Raum zwischen der Rückenlehne (10) und der Sitzbasis (12, 13) positioniert zu werden, wenn die Sitzbasis (12, 13) in der ausgefahrenen Position positioniert ist.

3. Sitz (1a, 1b, 1c) nach Anspruch 2, wobei das Ausgleichspolster (16) eine Dicke aufweist, so dass, wenn das Ausgleichspolster (16) auf der Sitzunterstützung (9) positioniert ist, die Oberseite des Ausgleichspolsters (16) im Wesentlichen komplanar mit der Oberseite der Sitzbasis (12, 13) ist.

4. Sitz (1a, 1b, 1c) nach einem der vorstehenden Ansprüche, wobei die Sitzbasis ein Plattenelement (12) umfasst und wobei der gelenkige kinematische Mechanismus (14) ein erstes Paar von Gelenkarmen (15a) und ein zweites Paar von Gelenkarmen (15b) umfasst, wobei die Arme von dem ersten Paar von Gelenkarmen (15a) und zweiten Paar von Gelenkarmen (15b) auf eine drehbare Weise mit dem Rahmen (2) und mit dem Plattenelement (12) verbunden sind.

5. Sitz (1a, 1b, 1c) nach dem vorstehenden Anspruch, wobei die Arme des ersten Paares von Gelenkarmen (15a) parallel zu den Armen des zweiten Paares von Gelenkarmen (15b) sind.

6. Sitz (1a, 1b, 1c) nach Anspruch 4 oder 5, wobei der Rahmen (2) ein vorderes Querstück (7) umfasst, das in einem vorderen Teil des Rahmens (2) positioniert ist, und wobei die Arme von dem ersten Paar von Gelenkarmen (15a) und zweiten Paar von Gelenkarmen (15b) auf eine drehbare Weise mit dem vorderen Querstück (7) verbunden sind.

7. Sitz (1a, 1b, 1c) nach dem vorstehenden Anspruch, wobei die Arme von dem ersten Paar von Gelenkarmen (15a) und zweiten Paar von Gelenkarmen (15b) einen entsprechenden gekrümmten Endabschnitt aufweisen, der an dem vorderen Querstück (7) bereitgestellt ist, auf eine solche Weise, dass der gekrümmte Endabschnitt eines ersten Arms des ersten Paares von Gelenkarmen (15a) und der gekrümmte Endabschnitt eines ersten Arms eines zweiten Paares von Gelenkarmen (15b) auf dem vorderen Querstück (7) aufliegen, wenn die Sitzbasis (12, 13) in der zurückgezogenen Position positioniert ist, und auf eine solche Weise, dass der gekrümmte Endabschnitt eines zweiten Arms des ersten Paares von Gelenkarmen (15a) und der gekrümmte Endabschnitt eines zweiten Arms des zweiten Paares von Gelenkarmen (15b) auf dem vorderen Querstück (7) aufliegen, wenn die Sitzbasis (12, 13) in der ausgefahrenen Position positioniert ist.

8. Sitz (101a, 101b, 101c) nach einem der vorstehenden Ansprüche, **dadurch gekennzeichnet, dass** er ein Verriegelungssystem (118) umfasst, um die Sitzbasis (112) in der zurückgezogenen Position zu verriegeln, wobei das Verriegelungssystem (118) mobile Eingriffsmittel (129) für einen gegenseitigen Eingriff der Sitzbasis (112) und des Rahmens (102) und Betätigungsmittel (119) zum Betätigen der Eingriffsmittel (129) umfasst.

9. Sitz (101a, 101b, 101c) nach Anspruch 8, **dadurch gekennzeichnet,**
**dass** zumindest ein Hohlraum (131) in dem Rahmen (102) ausgebildet ist;
**dass** die Betätigungsmittel (119) ein manuelles Betätigungselement (120), das zwischen einer Aktivierungsposition und einer Ruheposition bewegt werden kann, und ein flexibles Element (125) umfassen, das auf eine solche Weise positioniert ist, dass, wenn sich das manuelle Betätigungselement (120) in der Ruheposition befindet, sich das flexible Element (125) in der ausgefahrenen Konfiguration befindet, und wenn sich das manuelle Betätigungselement (120) in der Aktivierungsposition befindet, sich das flexible Element (125) in einer gefalteten Konfiguration befindet;
und **dass** die Eingriffsmittel einen Stift (129) umfassen, der auf eine solche Weise mit dem flexiblen Element (125) verbunden ist, dass, wenn sich das flexible Element (125) in der ausgefahrenen Konfiguration befindet, der Stift (129) mit dem zumindest einen Hohlraum (131) in Eingriff steht, und dass, wenn sich das flexible Element (125) in der gefalteten Konfiguration befindet, der Stift (129) von dem zumindest einen Hohlraum (131) gelöst ist.

10. Sitz (101a, 101b, 101c) nach Anspruch 9, **dadurch gekennzeichnet, dass** das Verriegelungssystem (118) elastische Mittel (132) umfasst, die konfiguriert sind, um den Stift (129) mit dem zumindest einen Hohlraum (131) in Eingriff zu halten.

11. Reihe (1) von Sitzen (1a, 1b, 1c), die zumindest zwei Sitze nach einem der vorstehenden Ansprüche umfasst, wobei die zumindest zwei Sitze nebeneinander stehen.

## Revendications

1. Siège de véhicule configurable différemment (1a, 1b, 1c ; 101a, 101b, 101c), comprenant :
un cadre (2, 102) ;
un dossier (10, 110) accouplé au cadre (2, 102) ; et
une unité d'assise (11, 111) comprenant une base d'assise (12, 13 ; 112) et un mécanisme cinématique articulé (14) pour relier la base d'assise (12, 13 ; 112) au cadre (2, 102), de telle manière que la base d'assise (12, 13 ; 112) soit mobile entre une position rétractée, dans laquelle un côté de la base d'assise (12, 13 ; 112) est sensiblement adjacent au dossier (10, 110) de sorte à permettre à un passager de s'asseoir sur la base d'assise (12, 13 ; 112) et une position étendue, dans laquelle la base d'assise (12, 13 ; 112) est positionnée à une distance prédéterminée du dossier (10, 110) de sorte à permettre au passager de reposer ses jambes sur la base d'assise (12, 13; 112) ;
**caractérisé en ce que** le siège (1a, 1b, 1c ; 101a, 101b, 101c) comprend un support d'assise (9) fixé au cadre (2, 102) et positionné de telle sorte que, lorsque la base d'assise (12, 13 ; 112) est dans la position rétractée, le support d'assise (9) est en dessous de la base d'assise (12, 13 ; 112) ; et de telle manière que, lorsque la base d'assise (12, 13 ; 112) est dans la position étendue, le support d'assise (9) est positionné entre le dossier (10, 110) et la base d'assise (12, 13 ; 112).

2. Siège (1a, 1b, 1c) selon la revendication 1, comprenant un coussin de compensation (16) configuré pour être positionné sur le support d'assise (9), dans l'espace entre le dossier (10) et la base d'assise (12, 13), lorsque la base d'assise (12, 13) est positionnée dans la position étendue.

3. Siège (1a, 1b, 1c) selon la revendication 2, dans lequel le coussin de compensation (16) a une épaisseur telle que, lorsque le coussin de compensation (16) est positionné sur le support d'assise (9), la surface supérieure du coussin de compensation (16) est sensiblement coplanaire avec la surface supérieure de la base d'assise (12, 13).

4. Siège (1a, 1b, 1c) selon l'une quelconque des revendications précédentes, dans lequel la base d'assise comprend un élément de plaque (12) et dans lequel le mécanisme cinématique articulé (14) comprend une première paire de bras articulés (15a) et une seconde paire de bras articulés (15b), les bras de la première paire de bras articulés (15a) et de la seconde paire de bras articulés (15b) étant reliés de manière rotative au cadre (2) et à l'élément de plaque (12).

5. Siège (1a, 1b, 1c) selon la revendication précédente, dans lequel les bras de la première paire de bras articulés (15a) sont parallèles aux bras de la seconde paire de bras articulés (15b).

6. Siège (1a, 1b, 1c) selon la revendication 4 ou 5, dans lequel le cadre (2) comprend une traverse avant (7) positionnée dans une partie avant du cadre (2) et dans lequel les bras de la première paire de bras articulés (15a) et de la seconde paire de bras articulés (15b) sont reliés de manière rotative à la traverse avant (7).

7. Siège (1a, 1b, 1c) selon la revendication précédente, dans lequel les bras de la première paire de bras articulés (15a) et de la seconde paire de bras articulés (15b) ont une partie d'extrémité incurvée respective, disposée au niveau de la traverse avant (7), de telle manière que la partie d'extrémité incurvée d'un premier bras de la première paire de bras articulés (15a) et la partie d'extrémité incurvée d'un premier bras de la seconde paire de bras articulés (15b) reposent sur la traverse avant (7) lorsque la base d'assise (12, 13) est positionnée dans la position rétractée, et de telle manière que la partie d'extrémité incurvée d'un second bras de la première paire de bras articulés (15a) et la partie d'extrémité incurvée d'un second bras de la seconde paire de bras articulés (15b) reposent sur la traverse avant (7) lorsque la base d'assise (12, 13) est positionnée dans la position étendue.

8. Siège (101a, 101b, 101c) selon l'une quelconque des revendications précédentes, **caractérisé en ce qu'**il comprend un système de verrouillage (118) pour verrouiller la base d'assise (112) dans la position rétractée ; le système de verrouillage (118) comprenant des moyens de mise en prise mobiles (129) pour mettre en prise mutuellement la base d'assise (112) et le cadre (102), et des moyens d'actionnement (119) pour actionner les moyens de mise en prise (129).

9. Siège (101a, 101b, 101c) selon la revendication 8, **caractérisé en ce qu'**au moins une cavité (131) est formée dans le cadre (102) ;
**en ce que** les moyens d'actionnement (119) comprennent un élément actionneur manuel (120) mobile entre une position d'actionnement et une position de repos, et un élément flexible (125) positionné de telle manière que lorsque l'élément actionneur manuel (120) est dans la position de repos, l'élément flexible (125) est dans une configuration étendue, et lorsque l'élément actionneur manuel (120) est dans la position d'actionnement, l'élément flexible (125) est dans une configuration pliée ;
et **en ce que** les moyens de mise en prise comprennent une broche (129) connectée à l'élément flexible (125) de telle manière que lorsque l'élément flexible (125) est dans la position étendue, la broche (129) est en prise avec l'au moins une cavité (131), et **en ce que** lorsque l'élément flexible (125) est dans la configuration repliée, la broche (129) est dégagée de l'au moins une cavité (131).

10. Siège (101a, 101b, 101c) selon la revendication 9, **caractérisé en ce que** le système de verrouillage (118) comprend des moyens élastiques (132) configurés pour maintenir la broche (129) en prise avec l'au moins une cavité (131).

11. Série (1) de sièges (1a, 1b, 1c) comprenant au moins deux sièges selon l'une quelconque des revendications précédentes, dans laquelle les au moins deux sièges sont côte à côte.
